# EUROPÄISCHE PATENTSCHRIFT

(11) **EP 2 909 051 B1**
(45) Veröffentlichungstag und Bekanntmachung des Hinweises auf die Patenterteilung: **02.08.2017**
(21) Anmeldenummer: 13780112.2
(22) Anmeldetag: 17.10.2013
(51) Int. Cl.: B60K 6/365, B60K 6/48, F16H 3/66, F16H 3/72

(54) **GETRIEBE UND VERFAHREN ZU DESSEN BETREIBEN**
TRANSMISSION AND METHOD FOR OPERATING THE SAME
BOÎTE DE VITESSES ET PROCÉDÉ POUR LA FAIRE FONCTIONNER

(30) Priorität: 22.10.2012 AT 504642012; 08.05.2013 AT 503102013
(43) Veröffentlichungstag der Anmeldung: 26.08.2015
(73) Patentinhaber: AVL List GmbH, 8020 Graz (AT)
(72) Erfinder: LICHTENEGGER, Stefan, 8511 St. Stefan (AT); ERJAWETZ, Konstantin, 8570 Voitsberg (AT)
(74) Vertreter: Babeluk, Michael
(86) Internationale Anmeldenummer: PCT/EP2013/071681
(87) Internationale Veröffentlichungsnummer: WO 2014/063980

(56) Entgegenhaltungen:
- DE-A1-102005 014 332
- DE-A1-102005 022 011
- DE-A1-102005 039 592
- DE-A1-102010 053 757
- US-A1- 2010 130 321

## Beschreibung

Die Erfindung betrifft ein Getriebe mit einem einen Primärantrieb mit einer Primärantriebswelle aufweisenden Antriebsstrang, insbesondere für ein Fahrzeug, mit einem Ravigneaux-Planetensatz mit einem zwei Sonnenradwellen, eine Stegwelle und zumindest eine Hohlradwelle aufweisenden doppelten Planetengetriebe, und einem vorgeschalteten, als Reduktionsgetriebe ausgebildeten einfachen Planetensatz mit den Getriebeelementen Sonnenrad, Steg und Hohlrad, wobei ein erstes der Getriebeelemente des einfachen Planetensatzes gehäusefest ausgebildet ist. Weiters betrifft die Erfindung ein Verfahren zum Betreiben des Getriebes.

Ein Getriebe der eingangs genannten Art ist aus der US 5,106,352 A bekannt. Derartige sogenannte Lepelletier-Getriebe werden beispielsweise in Automatikgetrieben von Fahrzeugen verwendet und stellen eine Weiterentwicklung des sogenannten Ravigneaux-Satzes - einem doppelten Planetengetriebe - dar. Der Lepelletier-Satz entsteht, indem einem Ravigneaux-Satz ein weiterer einfacher Planetensatz vorangestellt und mit Kupplungen verbunden wird. Das Hohlrad des einfachen Planetensatzes ist dabei permanent mit der Motorantriebswelle verbunden. Das heißt, dass auch im Leerlauf der einfache Planetenradsatz immer mitgedreht wird. Der Abtrieb erfolgt über das Hohlrad des Ravigneaux-Satzes und ist über das Differential mit den Antriebsrädern verbunden. Das Sonnenrad des einfachen Planetensatzes wird permanent blockiert. Nachteilig ist, dass eine große Anzahl an Kupplungen und Bremsen, sowie zum Anfahren separate Anfahreinrichtungen, wie zum Beispiel hydrodynamische Drehmomentwandler oder dergleichen, erforderlich sind.

Die DE 10 2004 053 044 A1 offenbart ein Getriebe für einen Hybridantrieb mit einem Doppelplanetensatz und einem einfachen Planetensatz, wobei jede Sonnenradwelle des Doppelplanetensatzes mit je einer elektrischen Maschine antriebsverbunden ist. Die US 2010/0130321 A1 zeigt ein Getriebe mit den Merkmalen des Oberbegriffs von Anspruch 1. Aufgabe der Erfindung ist es, die genannten Nachteile zu vermeiden und bei einem Getriebe der eingangs genannten Art mit geringem Aufwand und Platzbedarf eine hohe Funktionalität zu erreichen.

Erfindungsgemäß wird dies dadurch erreicht, dass zumindest ein erstes Element des Ravigneaux-Planetensatzes, vorzugsweise permanent, mit einem Sekundärantrieb antriebsverbunden ist. Der Sekundärantrieb kann vorteilhaft durch eine elektrische Maschine gebildet sein. Dies ermöglicht es, Primärantrieb und Sekundärantrieb in vorteilhafter Weise zu kombinieren oder alternativ einzusetzen.

Vorzugsweise ist ein zweites Element des Ravigneaux-Planetensatzes mittels einer Bremseinrichtung blockierbar.

Besonders vorteilhaft ist es, wenn ein drittes Element des Ravigneaux-Planetensatzes, vorzugsweise eine erste Sonnenradwelle des Ravigneaux-Planetensatzes, - besonders vorzugsweise permanent - mit einem zweiten Getriebeelement des einfachen Planetensatzes, vorzugsweise mit dem Steg des einfachen Planetensatzes, antriebsverbunden bzw. antriebsverbindbar ist. In einer nicht beanspruchten Variante ist das erste Element des Ravigneaux-Planetensatzes dabei durch eine zweite Sonnenradwelle und das zweite Element durch die Stegwelle gebildet. Alternativ dazu kann bei dieser nicht beanspruchten Variante vorgesehen sein, dass das erste Element durch die Stegwelle des Ravigneaux-Planetensatzes und das zweite Element durch die zweite Sonnenradwelle des Ravigneaux-Planetensatzes gebildet sind. Somit können die Positionen des Sekundärantriebes und der Bremseinrichtung innerhalb des Ravigneaux-Planetensatzes zur Erzielung besonderer Anforderungen hinsichtlich Platzbedarf und Funktionsanforderungen vorteilhaft ausgetauscht werden.

Die erste Sonnenradwelle und die zweite Sonnenradwelle weisen dabei unterschiedliche Drehrichtungen auf, da die erste Sonnenradwelle über einen Satz erster Planetenräder auf einen Satz zweiter Planetenräder einwirkt, wogegen die zweite Sonnenradwelle direkt auf den Satz zweiter Planetenräder einwirkt. Erfindungsgemäß ist jedoch das erste Element des Ravigneaux-Planetensatz durch ein zweites Hohlrad gebildet. Der Sekundärantrieb kann dabei indirekt über eine Übersetzungsstufe oder direkt mit dem zweiten Hohlrad antriebsverbunden sein. Diese Ausführung hat den Vorteil, dass ein zweiter stufenlos leistungsverzweigter Betriebsbereich realisiert werden kann.

Der einfache Planetensatz bildet dabei ein Reduktionsgetriebe und ist bevorzugt als Minusgetriebe ausgeführt. Minusgetriebe sind Planetengetriebe, bei denen - bei einer festgehaltenen Welle - die beiden anderen Wellen in unterschiedlichen Drehrichtungen umlaufen.

Dabei kann zumindest ein Element des Ravigneaux-Planetensatzes, vorzugsweise die Stegwelle, mit dem Primärantrieb - beispielsweise einer Brennkraftmaschine, insbesondere über eine erste Kupplungseinrichtung, antriebsverbindbar sein. Dasselbe Element des Ravigneaux-Planetensatzes kann alternativ, vorzugsweise permanent, mit einer beispielsweise durch eine elektrische Maschine gebildeten Antriebsmaschine antriebsverbunden sein.

Eine sehr kompakte Bauweise lässt sich erzielen, wenn der Ravigneaux-Planetensatz und/oder der einfache Planetensatz innerhalb eines Rotors des Primär- oder Sekundärantriebes angeordnet ist.

Um einerseits einen stufenlosen leistungsverzweigten Betriebsbereich und andererseits je drei Gangstufen für kombinierten Antrieb und rein elektrischen Antrieb zu ermöglichen, benötigt das Getriebe nur eine einzige Bremseinrichtung für das Blocken einer Sonnenradwelle des Ravigneaux-Planetensatzes und drei Kupplungseinrichtungen. Dabei ist eine erste Kupplungseinrichtung zwischen der Primärantriebswelle und einer Getriebeantriebswelle angeordnet. Gemäß einer nicht beanspruchten Variante kann eine zweite Kupplungseinrichtung zwischen den beiden Sonnenradwellen des Ravigneaux-Planetensatzes und eine dritte Kupplungseinrichtung zwischen der Getriebeantriebswelle und der Stegwelle des Ravigneaux-Planetensatzes angeordnet sein.

Bei erfindungsgemäßen Ausführungen sind in zumindest einem stufenlos leistungsverzweigten Betriebsbereich die erste Kupplungseinrichtung und die zweite oder die dritte Kupplungseinrichtung aktiviert. Im erfindungsgemäßen Getriebe, in dem der Sekundärantrieb über ein zweites Hohlrad auf den Ravigneaux-Planetensatz einwirkt, werden in einem ersten stufenlos leistungsverzweigten Betriebsbereich die erste und die zweite Kupplungseinrichtung, und in einem zweiten stufenlos leistungsverzweigten Betriebsbereich die erste Kupplungseinrichtung und die dritte Kupplungseinrichtung aktiviert.

Im stufenlos leistungsverzeigten Betriebsbereich kann der Primärantrieb stationär und der Sekundärantrieb generatorisch oder motorisch betrieben werden. Beim stufenlos leistungsverzweigten Anfahren kann - bis zu einer gewissen Grenzgeschwindigkeit - beim Anfahren Strom erzeugt werden. Weiters ist ein stufenloses elektrodynamisches Anfahren möglich. Ein separates Anfahrelement, wie zum Beispiel ein hydrodynamischer Drehmomentwandler, kann entfallen. Die erste Kupplungseinrichtung hat dabei nur Trenn- bzw. Zuschaltfunktion und dient nicht als Anfahrkupplung.

In zumindest einem Gangstufenbetriebsbereich werden die Bremseinrichtung, die zweite Kupplungseinrichtung oder die dritte Kupplungseinrichtung aktiviert.

In einer besonders vorteilhaften Ausführungsvariante der Erfindung ist die zweite Kupplungseinrichtung nicht zwischen den beiden Sonnenradwellen des Ravigneaux-Planetensatzes, sondern zwischen einer ersten Sonnenradwelle des Ravigneaux-Planetensatzes und einer Summenwelle des einfachen Planetensatzes, insbesondere dem Steg, angeordnet. Somit kann durch Trennen der Antriebsverbindung zwischen dem ersten Sonnenrad des Ravigneaux-Planetensatzes und dem Steg des einfachen Planetensatzes die Summenwelle drehmomentenfrei gemacht werden. Die erste und dritte Kupplungseinrichtung können dabei gleich positioniert werden, wie in der bereits erläuterten Ausführungsvariante. In jedem Gangstufenbereich werden - abgesehen von der ersten Kupplungseinrichtung - zwei Elemente aus der Gruppe zweite Kupplungseinrichtung, dritte Kupplungseinrichtung und Bremseinrichtung aktiviert und das dritte Element deaktiviert. Dies ermöglicht eine vergleichsweise große Spreizung in den einzelnen Gangstufenbereichen. Weiters wird der Wirkungsgrad des Getriebes verbessert.

Das Umschalten vom stufenlos leistungsverzweigten Betriebsbereich in einen der drei Gangstufenbetriebsbereiche (Gänge) kann während dem Fahrbetrieb erfolgen. Während dem Betrieb in einem der drei schaltbaren Gänge kann der Sekundärbetrieb wahlweise generatorisch oder motorisch betrieben werden, um Hybridfunktionalitäten wie zum Beispiel "Boosten" (Unterstützen des Antriebsmomentes des Primärantriebes), "Rekuperieren", "Lastpunktverschiebung" oder "Segeln" auszuführen. In allen Gängen kann eine elektromotorische Drehmomentbeaufschlagung erfolgen. Während des Rekuperierens kann ein sehr hoher Wirkungsgrad erreicht werden, da zwischen dem Abtrieb und der elektrischen Maschine nur wenig Verluste (nur Leerlaufverluste) auftreten.

Im Vergleich zu bekannten Lepelletier-Getrieben ergibt sich eine deutliche Reduktion an Kupplungs- und Bremseinrichtungen.

Die Erfindung wird im Folgenden anhand der Fig. näher erläutert. Es zeigen schematisch:
- Fig. 1: ein nicht beanspruchtes Getriebe in einer ersten Ausführungsvariante;
- Fig. 2: ein Drehzahl-Leiterdiagramm dieses Getriebes;
- Fig. 3: eine Schaltmatrix dieses Getriebes;
- Fig. 4: ein nicht beanspruchtes Getriebe in einer zweiten Ausführungsvariante;
- Fig. 5: ein Drehzahl-Leiterdiagramm dieses Getriebes;
- Fig. 6: eine Schaltmatrix dieses Getriebes;
- Fig. 7: ein nicht beanspruchtes Getriebe in einer dritten Ausführungsvariante;
- Fig. 8: ein erfindungsgemäßes Getriebe in einer vierten Ausführungsvariante;
- Fig. 9: ein Drehzahl-Leiterdiagramm dieses Getriebes;
- Fig. 10: eine Schaltmatrix dieses Getriebes; und
- Fig. 11: ein erfindungsgemäßes Getriebe in einer fünften Ausführungsvariante.

Funktionsgleiche Teile sind in den Ausführungen mit gleichen Bezugszeichen versehen.

Das Getriebe 1 weist in allen Ausführungsvarianten jeweils einen Ravigneaux-Planetensatz 2 mit einem vorgeschalteten einfachen Planetensatz 3 auf, wobei der einfache Planetensatz 3 als ein durch ein Minusgetriebe gebildeter Reduzierplanetensatz ausgeführt ist.

Der im Wesentlichen durch ein doppeltes Planetengetriebe gebildete Ravigneaux-Planetensatz 2 weist ein erstes und ein zweites Sonnenrad 10a, 13a, welche mit entsprechenden ersten und zweiten Sonnenradwellen 10, 13 verbunden sind, sowie zumindest ein mit einer Hohlradwelle 12 verbundenes erstes Hohlrad 12a auf.

Ein Satz erster Planetenräder 18a kämmt mit dem ersten Hohlrad 12a und dem zweiten Sonnenrad 13a. Ein Satz zweiter Planetenräder 18b kämmt mit dem ersten Sonnenrad 10a und steht mit den ersten Planetenrädern 18a im Eingriff.

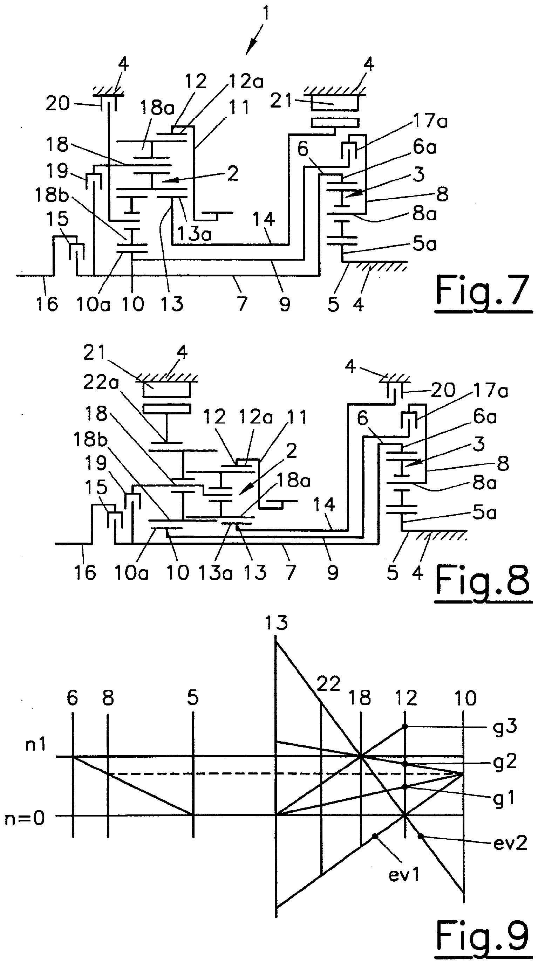

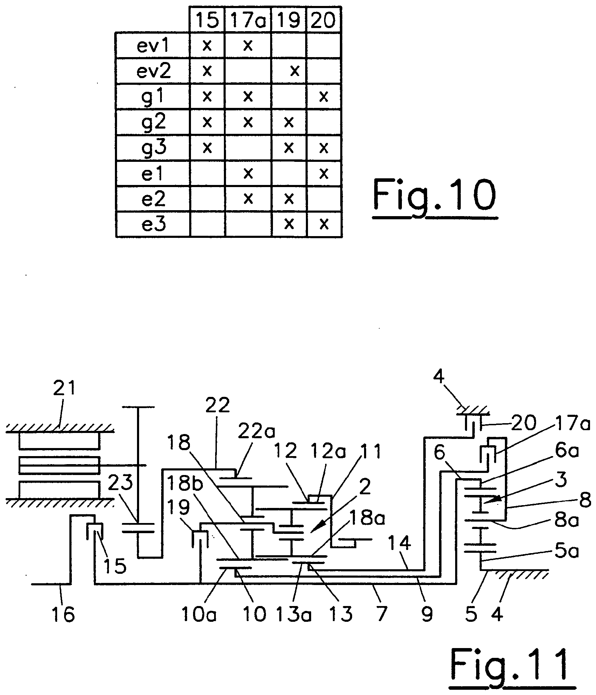

Bei den erfindungsgemäßen Ausführungen gemäß Fig. 8 und Fig. 11 weist der Ravigneaux-Planetensatz 2 ein zweites Hohlrad 22a auf, welches mit den Planetenrädern 18b im Zahneingriff steht.

Der einfache Planetensatz 3 weist bei allen Ausführungen eine permanent mit dem Gehäuse 4 des Getriebes 1 gekoppelte erste Differenzwelle 5 des Sonnenrades 5a auf. Die zweite Differenzwelle 6 des Hohlrades 6a des einfachen Planetensatzes 2 ist permanent mit der Getriebeantriebswelle 7 drehbar verbunden. Die Summenwelle 8 des Steges 8a des einfachen Planetensatzes 3 ist über eine erste Getriebewelle 9 permanent mit der ersten Sonnenradwelle 10 des Ravigneaux-Planetensatz 2 verbunden. Der Abtrieb erfolgt über eine Getriebeabtriebswelle 11, welche permanent mit einer Hohlradwelle 12 des Ravigneaux-Planetensatzes 2 drehbar in Verbindung steht. Die zweite Sonnenradwelle 13 des Ravigneaux-Planetensatzes 2 steht mit einer zweiten Getriebewelle 14 drehbar in Verbindung. Die ersten und zweiten Getriebewellen 9, 14, sowie die Getriebeantriebs- und -abtriebswellen 7, 11 können als koaxial ausgebildete Zentralwellen ausgeführt sein.

Die Getriebeantriebswelle 7 kann über eine erste Kupplungseinrichtung 15 und eine Primärantriebswelle 16 mit einem nicht weiterdargestellten Primärantrieb antriebsverbunden werden. Der Primärantrieb kann beispielsweise eine Brennkraftmaschine sein.

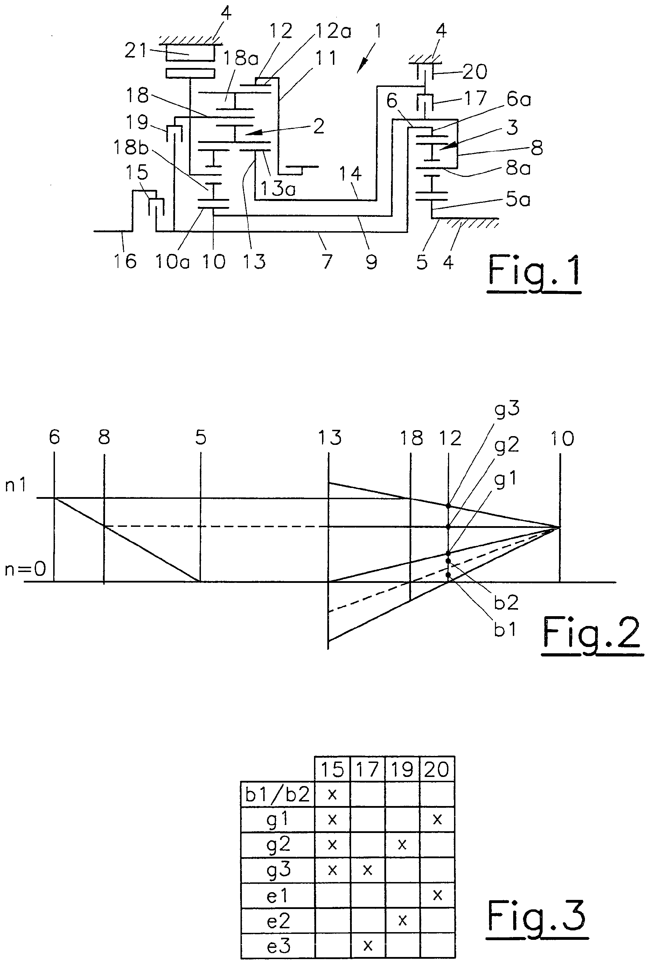

Bei der in Fig. 1 dargestellten ersten nicht erfindungsgemäßen ist eine zweite Kupplungseinrichtung 17 zwischen der ersten und zweiten Getriebewelle 9, 14 vorgesehen, welche es ermöglicht die beiden Sonnenradwellen 10, 13 des Ravigneaux-Planetensatzes 2, zu verbinden.

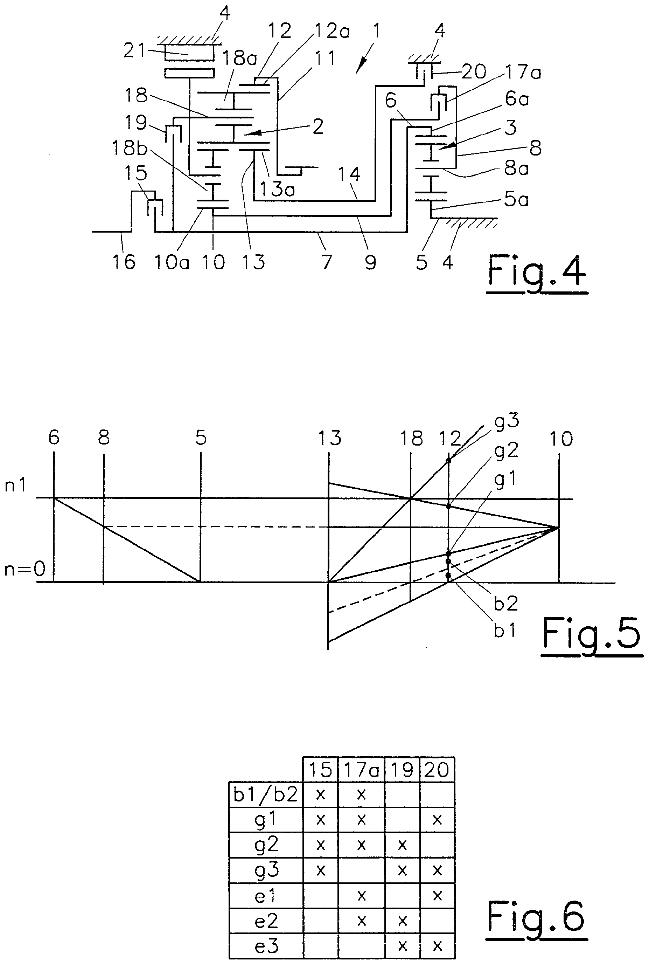

Dagegen ist bei der in Fig. 4 gezeigten zweiten nicht erfindungsgemäßen Ausführung stattdessen die zweite Kupplungseinrichtung 17a zwischen der ersten Getriebewelle 9 und der Summenwelle 8 des Steges 8a des einfachen Planetensatzes 3 angeordnet, über welche die Drehverbindung zwischen dem Steg 8a des einfachen Planetensatzes 3 und dem ersten Sonnenrad 10a des Ravigneaux-Planetensatzes 2 unterbrochen werden kann. Die Summenwelle 8 (Stegwelle) des einfachen Planetensatzes 3 kann somit durch die zweite Kupplungseinrichtung 17a drehmomentfrei geschaltet werden.

Die Stegwelle 18 des Ravigneaux-Planetensatzes 2 kann in allen drei Ausführungsvarianten über eine dritte Kupplungseinrichtung 19 drehbar mit der Getriebeantriebswelle 7 verbunden werden. Weiters kann die zweite Sonnenradwelle 13 des Ravigneaux-Planetensatzes 2 bzw. die zweite Getriebewelle 14 über eine Bremseinrichtung 20 blockiert werden.

Der Rotor des durch eine elektrische Maschine gebildeten Sekundärantriebes 21 ist permanent mit der Stegwelle 18 des Ravigneaux-Planetensatzes 2 antriebsverbunden.

Fig. 2 zeigt die möglichen Betriebsmodi des in Fig. 1 dargestellten Getriebes 1 anhand eines Leiterdiagramms für die Drehzahlen n mit der Antriebsdrehzahl n1 des Primärantriebs.

Durch das Aktivieren der zweiten oder dritten Kupplungseinrichtung 17, 19 oder der Bremseinrichtung 20 können drei Vorwärtsgänge g1, g2, g3 geschaltet werden. Die erste Kupplungseinrichtung 15 dient zum Abkoppeln des Primärantriebs und ist nur deaktiviert, wenn der Antrieb ausschließlich vom Sekundärantrieb 21 übernommen wird oder kein Antrieb erfolgt.

Ist keine der Kupplungs- oder Bremseinrichtungen 17, 19, 20 aktiviert, kann der Antriebsstrang in einem stufenlos leistungsverzweigten Betriebsbereich betrieben werden, indem vorteilhaft der Primärantrieb stationär betrieben wird und der Sekundärantrieb 21 in einem ersten Betriebsbereich b1 generatorisch und in einem zweiten Betriebsbereich b2 motorisch betrieben wird. Dadurch ist ein stufenloses elektrodynamisches Anfahren möglich, wodurch ein eigenes Anfahrelement wie zum Beispiel ein hydrodynamischer Drehmomentwandler oder eine Anfahrkupplung entfallen kann. Das Umschalten vom stufenlos leistungsverzweigten Betrieb in einen der drei schaltbaren Gänge g1, g2, g3 kann während dem Fahren erfolgen. Während dem Betrieb in einem der drei schaltbaren Gänge g1, g2, g3 kann der Sekundärbetrieb 21 wahlweise generatorisch oder motorisch betrieben werden, um Hybridfunktionalitäten wie zum Beispiel "Boosten", Rekuperieren", "Lastpunktverschiebung" oder "Segeln" zu ermöglichen.

Fig. 3 zeigt eine Schaltmatrix der Kupplungseinrichtungen 15, 17, 19 und der Bremseinrichtung 20 für die in Fig. 2 dargestellten Betriebsmodi, wobei ein "X" den aktivierten Zustand der entsprechenden Kupplungseinrichtungen 15, 17, 19 oder Bremseinrichtung 20 darstellt. Dabei sind die Betriebsmodi (Gangstufenbereiche) e1, e2 und e3 für reinen Antrieb durch die Antriebsmaschine 21 - abgesehen von der Stellung der ersten Kupplungseinrichtung 15 - äquivalent zu den Betriebsmodi (Gangstufenbereiche) g1, g2 und g3 für kombinierten Antrieb und können sowohl Vorwärts-, als auch Rückwärtsgänge sein.

Fig. 5 zeigt die möglichen Betriebsmodi des in Fig. 4 dargestellten Getriebes 1 anhand eines Leiterdiagramms für die Drehzahlen n mit der Antriebsdrehzahl n1 des Primärantriebs.

Durch das Aktivieren der zweiten Kupplungseinrichtung 17a und der Bremseinrichtung 20, oder der zweiten und dritten Kupplungseinrichtung 17a, 19, oder der dritten Kupplungseinrichtung 19 und der Bremseinrichtung 20, können drei Vorwärtsgänge g1, g2, g3 geschaltet werden. Die erste Kupplungseinrichtung 15 dient zum Abkoppeln des Primärantriebs und ist auch hier nur deaktiviert, wenn der Antrieb ausschließlich von der Antriebsmaschine 21 übernommen wird oder kein Antrieb erfolgt.

Ist keine der Kupplungs- oder Bremseinrichtungen 17a, 19, 20 aktiviert, so kann auch in der zweiten Ausführungsvarianten der Antriebsstrang in einem stufenlos leistungsverzweigten Betriebsbereich betrieben werden, indem vorteilhaft der Primärantrieb stationär betrieben wird und die Antriebsmaschine 21 in einem ersten Betriebsbereich b1 generatorisch und in einem zweiten Betriebsbereich b2 motorisch betrieben wird. Dadurch ist ein stufenloses elektrodynamisches Anfahren möglich, wodurch ein eigenes Anfahrelement wie zum Beispiel ein hydrodynamischer Drehmomentwandler oder eine Anfahrkupplung entfallen kann. Das Umschalten vom stufenlos leistungsverzweigten Betrieb in einen der drei schaltbaren Gänge g1, g2, g3 kann während dem Fahren erfolgen. Während dem Betrieb in einem der drei schaltbaren Gänge g1, g2, g3 kann der Sekundärantrieb 21 wahlweise generatorisch oder motorisch betrieben werden, um Hybridfunktionalitäten wie zum Beispiel "Boosten", Rekuperieren", "Lastpunktverschiebung" oder "Segeln" zu ermöglichen.

Aus dem in Fig. 5 dargestellten Drehzahl-Leiterdiagramm für die zweite Ausführungsvariante geht deutlich hervor, dass durch die Anordnung der zweiten Kupplung 17a zwischen dem Steg 8a des einfachen Planetensatzes 3 und dem ersten Sonnenrad 10a des Ravigneaux-Planetensatzes 2 im Vergleich zur ersten Ausführungsvariante eine größere Spreizung in den einzelnen Gangstufenbereichen g1, g2, g3; e1, e2, e3 möglich wird. Weiters kann die Lastschaltbarkeit verbessert werden, da in den Gangstufenbereichen g1, g2, g3; e1, e2, e3 jeweils nur eine Kupplungs-/Bremseinrichtung 15, 17a, 19, 20 überblendet werden muss. Darüber hinaus ist auch eine Wirkungsgradverbesserung erzielbar, da von den vier Schaltelementen - Kupplungseinrichtungen 15, 17a, 19 und Bremseinrichtung 20 - drei in den verbrennungsmotorischen Gangstufenbereichen g1, g2, g3 und zwei in den elektrischen Gangstufenbereichen e1, e2, e3 aktiviert (geschlossen) sind, wie aus der in Fig. 6 gezeigten Schaltmatrix der Kupplungseinrichtungen 15, 17a, 19 und der Bremseinrichtung 20 für die in Fig. 4 dargestellte Ausführungsvariante hervorgeht. Dabei sind für die in Fig. 5 dargestellten Betriebsmodi die Zustände der Kupplungseinrichtungen 15, 17a, 19 und der Bremseinrichtung 20 eingetragen, wobei ein "X" den aktivierten Zustand der entsprechenden Kupplungseinrichtungen 15, 17a, 19 oder Bremseinrichtung 20 darstellt. Die Betriebsmodi (Gangstufenbereiche) e1, e2 und e3 für reinen Antrieb durch die Antriebsmaschine 21 sind - abgesehen von der ersten Kupplungseinrichtung 15 - wiederum äquivalent zu den Betriebsmodi (Gangstufenbereiche) g1, g2 und g3 für kombinierten Antrieb und können sowohl Vorwärts-, als auch Rückwärtsgänge sein.

Die Positionen des Sekundärantriebes 21 und der Bremseinrichtung 20 im Ravigneaux-Planetensatz 2 können - beispielsweise zur Verbesserung hinsichtlich räumlicher Zwänge oder funktioneller Vorgaben - auch vertauscht sein. Das in Fig. 7 gezeigte nicht erfindungsgemäße Getriebe 1 unterscheidet sich von der in Fig. 4 dargestellten Ausführung dadurch, dass die Bremse 20 auf die Stegwelle 18 und der Sekundärantrieb 21 (über die zweite Getriebewelle 14) auf die Sonnenradwelle 13 einwirkt.

Weiters ist es auch möglich, den Sekundärantrieb 21 über ein weiteres Element - beispielsweise ein zweites Hohlrad 22a - auf den Ravigneaux-Planetensatz 2 einwirken zu lassen, wie in den Fig. 8 und 11 gezeigt ist. Das zweite Hohlrad 22a kann dabei mit den zweiten Planetenrädern 18b im Eingriff stehen. Die Fig. 8 zeigt ein erfindungsgemäßes Ausführungsbeispiel, bei denen der Sekundärantrieb 21 direkt mit dem zweiten Hohlrad 22a antriebsverbunden ist. In Fig. 11 ist ein weiteres erfindungsgemäßes Beispiel dargestellt, bei dem der Sekundärantrieb 21 indirekt über eine Übersetzungsstufe 23 und eine Hohlradwelle 22 mit dem zweiten Hohlrad 22a verbunden ist.

Diese Ausführungen haben den Vorteil, dass zusätzlich zu einem stufenlos leistungsverzweigten ersten Betriebsbereich ev1 ein stufenlos leistungsverzweigter zweiter Betriebsbereich ev2 realisierbar ist, wie aus dem in Fig. 9 dargestellten Drehzahl-Leiterdiagramm und der in Fig. 10 gezeigten Schaltmatrix hervorgeht. Die Fig. 9 und 10 unterscheiden sich von den Fig. 5 und Fig. 6 vorallem durch den zusätzlichen Betriebsbereich ev2, in welchem die erste Kupplung 15 und die dritte Kupplung 19 aktiviert ist. im ersten Betriebsbereich ev1 dagegen wird - analog zum Betriebsbereich b1/b2 aus den Fig. 5 und Fig. 6 - die erste Kupplung 15 und die zweite Kupplung 17a aktiviert. Wie beim Betriebsbereich b1/b2 kann auch in den Betriebsbereichen ev1 und ev2 der beispielsweise durch eine elektrische Maschine gebildete Sekundärantrieb 21 motorisch oder generatorisch betrieben werden.

Die Bezeichnungen "primär" und "sekundär" in Primär- und Sekundärantrieb werden hier wertungsfrei und nur zur Unterscheidung der Antriebe verwendet. Sowohl der Primärantrieb, als auch der Sekundärantrieb kann für sich als hauptsächlich oder überwiegend eingesetzter Standard- bzw. Hauptantrieb für das Fahrzeug ausgebildet sein, wobei der jeweilige andere Antrieb als temporär zuschaltbarer Hilfsantrieb ausgeführt sein kann. Genauso ist es möglich, beide Antriebe gleichwertig auszuführen und - eventuell abwechselnd - sowohl als Standard- bzw. Hauptantrieb, als auch als Hilfsantrieb einzusetzen. Weiters ist auch eine gemeinsame gleichwertige Verwendung der beiden Antriebe in den Schaltbereichen g1, g2, g3 möglich.

## Patentansprüche

1. Getriebe (1) mit einem einen Primärantrieb mit einer Primärantriebswelle (16) aufweisenden Antriebsstrang für ein Fahrzeug, mit einem Ravigneaux-Planetensatz (2) mit einem zwei Sonnenradwellen (10, 13), eine Stegwelle (18) und zumindest eine Hohlradwelle (12) mit einem ersten Hohlrad (12a) aufweisenden doppelten Planetengetriebe, und einem vorgeschalteten, als Reduktionsgetriebe ausgebildeten einfachen Planetensatz (3) mit den Getriebeelementen Sonnenrad (5a), Steg (8a) und Hohlrad (6a), wobei ein erstes der Getriebeelemente des einfachen Planetensatzes (2), insbesondere das Sonnenrad (5a), gehäusefest ausgebildet ist, wobei zumindest ein erstes Element des Ravigneaux-Planetensatzes (2), vorzugsweise permanent, mit einem - besonders vorzugsweise durch eine elektrische Maschine gebildeten - Sekundärantrieb (21) antriebsverbunden ist, **dadurch gekennzeichnet, dass** das erste Element des Ravigneaux-Planetensatzes (2) durch ein zweites Hohlrad (22a) gebildet ist.

2. Getriebe (1) nach Anspruch 1, **dadurch gekennzeichnet, dass** ein zweites Element des Ravigneaux-Planetensatzes (2) mittels einer Bremseinrichtung (20) blockierbar ist.

3. Getriebe (1) nach Anspruch 1 oder 2, **dadurch gekennzeichnet, dass** ein drittes Element des Ravigneaux-Planetensatzes (2), vorzugsweise eine erste Sonnenradwelle (10) des Ravigneaux-Planetensatzes (2), - besonders vorzugsweise permanent - mit einem zweiten Getriebeelement des einfachen Planetensatzes (3), vorzugsweise mit dem Steg (8a) des einfachen Planetensatzes (3), antriebsverbunden bzw. mittels einer zweiten Kupplungseinrichtung (17a) antriebsverbindbar ist.

4. Getriebe (1) nach einem der Ansprüche 1 bis 3, **dadurch gekennzeichnet, dass** zumindest ein Element des Ravigneaux-Planetensatz (2), vorzugsweise das erste Element des Ravigneaux-Planetensatzes (2), besonders vorzugsweise die Stegwelle (18) des Ravigneaux-Planetensatzes (2), mit dem - vorzugsweise durch eine Brennkraftmaschine gebildeten - Primärantrieb antriebsverbindbar ist.

5. Getriebe (1) nach einem der Ansprüche 1 bis 4, **dadurch gekennzeichnet, dass** der Ravigneaux-Planetensatz (2) und/oder der einfache Planetensatz (3) innerhalb eines Rotors des Primärantriebes oder des Sekundärantriebes (21) angeordnet ist.

6. Getriebe (1) nach einem der Ansprüche 1 bis 5, **dadurch gekennzeichnet, dass** die Primärantriebswelle (16) und eine Getriebeantriebswelle (7) mittels einer ersten Kupplungseinrichtung (15) drehverbindbar sind.

7. Getriebe (1) nach einem der Ansprüche 1 bis 6, **dadurch gekennzeichnet, dass** die Getriebeantriebswelle (7) und die Stegwelle (18) des Ravigneaux-Planetensatzes (2) mittels einer dritten Kupplungseinrichtung (19) drehverbindbar sind.

8. Verfahren zum Betreiben eines Getriebes (1) nach den Ansprüchen 2, 3, 6 und 7, **dadurch gekennzeichnet, dass** in zumindest einem stufenlos leistungsverzweigten Betriebsbereich (ev1, ev2) die erste Kupplungseinrichtung (15) und die zweite (17a) oder die dritte Kupplungseinrichtung (19) -geschlossen wird, und dass in zumindest einem Gangstufenbetriebsbereich (g1, g2, g3, e1, e2, e3) zumindest eine erste Einrichtung aus der Gruppe Bremseinrichtung (20), zweite Kupplungseinrichtung (17a) oder dritte Kupplungseinrichtung (19) - vorzugsweise auch eine weitere Einrichtung dieser Gruppe - geschlossen wird.

9. Verfahren nach Ansprch 8, **dadurch gekennzeichnet, dass** in einem ersten stufenlos leistungsverzweigten Betriebsbereich (ev1) die erste Kupplungseinrichtung (15) und die zweite Kupplungseinrichtung (17a), und in einem zweiten stufenlos leistungsverzweigten Betriebsbereich (ev2) die erste Kupplungseinrichtung (15) und die dritte Kupplungseinrichtung (19) geschlossen werden.

10. Verfahren nach Anspruch 8 oder 9, **dadurch gekennzeichnet, dass** im stufenlos leistungsverzweigten Betriebsbereich (b1, b2) der Primärantrieb und der Sekundärantrieb (21) geschlossen werden, wobei vorzugsweise der Primärantrieb stationär, und der Sekundärantrieb (21) motorisch oder generatorisch betrieben wird.

11. Verfahren nach einem der Ansprüche 8 bis 10 **dadurch gekennzeichnet, dass** in zumindest einem Gangstufenbetriebsbereich (g1, g2, g3) der Primärantrieb transient betrieben wird und der Sekundärantrieb (21) motorisch oder generatorisch betrieben wird.

12. Verfahren nach einem der Ansprüche 8 bis 11 **dadurch gekennzeichnet, dass** in zumindest einem Gangstufenbetriebsbereich (e1, e2, e3) der Primärantrieb deaktiviert wird und der Sekundärantrieb (21) motorisch oder generatorisch betrieben wird.

13. Verfahren nach einem der Ansprüche 8 bis 12 **dadurch gekennzeichnet, dass** in einem ersten Gangstufenbetriebsbereich (g1; e1) die Bremseinrichtung (20), vorzugsweise auch die zweite Kupplungseinrichtung (17a), geschlossen wird.

14. Verfahren nach einem der Ansprüche 8 bis 13 **dadurch gekennzeichnet, dass** in einem zweiten Gangstufenbetriebsbereich (g2; e2) die dritte Kupplungseinrichtung (19), vorzugsweise auch die zweite Kupplungseinrichtung (17a), geschlossen wird.

15. Verfahren nach einem der Ansprüche 8 bis 14 **dadurch gekennzeichnet, dass** in einem dritten Gangstufenbetriebsbereich (g3; e3) die dritte Kupplungseinrichtung (19) und die Bremseinrichtung (20) geschlossen werden.

## Claims

1. A transmission (1), comprising a drive train for a vehicle having a primary drive with a primary drive shaft (16), a Ravigneaux planetary gear set (2) which has a double planetary gear with two sun gear shafts (10, 13), one planetary carrier shaft (18) and at least one ring gear shaft (12) with a first ring gear (12a), and an upstream single planetary gear set (3) which is arranged as a reduction gearing and comprises the gear elements of sun gear (5a), planetary carrier (8a) and ring gear (6a), wherein a first of said gear elements of the single planetary gear (3), especially the sun gear (5a), is designed to be fixed to a housing, wherein at least one first element of the Ravigneaux planetary gear set (2) is drive-connected, preferably permanently, to a secondary drive (21), which is especially preferably formed by an electric machine, **characterised in that** the first element of the Ravigneaux planetary gear set (2) is formed by a second ring gear (22a).

2. A transmission (1) according to claim 1, **characterised in that** a second element of the Ravigneaux planetary gear set (2) can be blocked by means of a braking device (20).

3. A transmission (1) according to claim 1 or 2, **characterised in that** a third element of the Ravigneaux planetary gear set (2), preferably a first sun gear shaft (10) of the Ravigneaux planetary gear set (2), is drive-connected, especially preferably in a permanent manner, to a second gear element of the single planetary gear set (3), preferably to the planet carrier (8a) of the single planetary gear set (3), or can be drive-connected by means of a second clutch device (17a).

4. A transmission (1) according to one of the claims 1 to 3, **characterised in that** at least one element of the Ravigneaux planetary gear set (2), preferably the first element of the Ravigneaux planetary gear set (2), especially preferably the planetary carrier shaft (18) of the Ravigneaux planetary gear set (2), can be drive-connected to the primary drive, which is preferably formed by an internal combustion engine.

5. A transmission (1) according to one of the claims 1 to 4, **characterised in that** the Ravigneaux planetary gear set (2) and/or the single planetary gear set (3) is arranged within a rotor of the primary drive or secondary drive (21).

6. A transmission (1) according to one of the claims 1 to 5, **characterised in that** the primary drive shaft (16) and a transmission drive shaft (7) are rotatably connectable by means of a first clutch device (15).

7. A transmission (1) according to one of the claims 1 to 6, **characterised in that** the transmission drive shaft (7) and the planetary gear shaft (18) of the Ravigneaux planetary gear set (2) are rotatably connectable by means of a third clutch device (19).

8. A method for operating a transmission (1) according to the claims 2, 3, 6 and 7, **characterised in that** in at least one continuously variable power-split operating range (ev1, ev2) the first clutch device (15) and the second (17a) or the third clutch device (19) are closed, and that in at least one gear step operating range (g1, g2, g3, e1, e2, e3) at least one first device of the group of the braking device (20), second clutch device (17a) or third clutch device (19) is activated, preferably also a further device of said group.

9. A method according to claim 8, **characterised in that** in a first continuously variable power-split operating range (ev1) the first clutch device (15) and the second clutch device (17a) are closed, and in a second continuously variable power-split operating range (ev2) the first clutch device (15) and the third clutch device (19).

10. A method according to claim 8 or 9, **characterised in that** the primary drive and the secondary drive (21) are closed in the continuously variable power-split operating range (b1, b2), wherein preferably the primary drive is operated in a stationary manner, and the secondary drive (21) as a motor or a generator.

11. A method according to one of the claims 8 to 10, **characterised in that** the primary drive is operated in a transient manner in at least one gear step operating range (g1, g2, g3) and the secondary drive (21) is operated as a motor or a generator.

12. A method according to one of the claims 8 to 11, **characterised in that** the primary drive is deactivated in at least one gear step operating range (e1, e2, e3) and the secondary drive (21) is operated as a motor or a generator.

13. A method according to one of the claims 8 to 12, **characterised in that** the braking device (20), and preferably also the second clutch device (17a), is closed in a first gear step operating range (g1; e1).

14. A method according to one of the claims 8 to 13, **characterised in that** the third clutch device (19), preferably also the second clutch device (17a), is closed in a second gear step operating range (g2; e2).

15. A method according to one of the claims 8 to 14, **characterised in that** the third clutch device (19) and the braking device (20) are closed in a third gear step operating range (g3; e3).

## Revendications

1. Boîte de vitesses (1) comportant une ligne de transmission de véhicule avec un entraînement primaire et un arbre d'entraînement primaire (16), un train planétaire de Ravigneaux (2) avec une transmission planétaire (12) ayant deux arbres de roue solaire (10, 13), un arbre porte satellites (18) et au moins un arbre de couronne (12) avec une première couronne dentée (12a) et un train planétaire (3), simple, formant une transmission de réduction, en amont, ayant une roue comme élément de boîte de vitesses, une roue solaire (5a), un porte-satellites (8a) et une couronne (6a), un premier élément de transmission du train planétaire simple (2) notamment sa roue solaire (5a) étant solidaire du boîtier,
au moins un premier élément du train planétaire de Ravigneaux (2) étant relié dans le sens de l'entraînement en permanence avec un entraînement secondaire (21) réalisé d'une manière particulièrement préférentielle par une machine électrique,
boîte de vitesses **caractérisée en ce que**
le premier élément du train planétaire de Ravigneaux (2) est constitué par une seconde couronne dentée (22a).

2. Boîte de vitesses (1) selon la revendication 1,
**caractérisée en ce qu'**
un second élément du train planétaire de Ravigneaux (2) se bloque avec un frein (20).

3. Boîte de vitesses (1) selon la revendication 1 ou 2,
**caractérisée en ce qu'**
un troisième élément du train planétaire de Ravigneaux (2), de préférence un premier arbre de roue solaire (10) du train planétaire de Ravigneaux (2), est relié d'une manière particulièrement préférentielle de façon permanente à un second élément de transmission du train planétaire simple (3), de préférence avec le porte-satellites (8a) du train planétaire simple (3) dans le sens de l'entraînement ou en pouvant être relié dans le sens de l'entraînement par une seconde installation d'embrayage (17a).

4. Boîte de vitesses (1) selon l'une des revendications 1 à 3,
**caractérisée en ce qu'**
au moins un élément du train planétaire de Ravigneaux (2), de préférence le premier élément du train planétaire de Ravigneaux (2) et d'une manière particulièrement préférentielle l'arbre porte-satellites (18) du train planétaire de Ravigneaux (2) est relié dans le sens de l'entraînement primaire de préférence constitué par le moteur à combustion interne.

5. Boîte de vitesses (1) selon l'une des revendications 1 à 4,
**caractérisée en ce que**
le train planétaire de Ravigneaux (2) et/ou le train planétaire simple (3) est logé dans le rotor de l'entraînement primaire ou de l'entraînement secondaire (21).

6. Boîte de vitesses (1) selon l'une des revendications 1 à 5,
**caractérisé en ce que**
l'arbre d'entraînement primaire (16) et l'arbre d'entraînement (7) de la boîte peuvent être reliés dans le sens de la rotation par une première installation d'embrayage (15).

7. Boîte de vitesses (1) selon l'une des revendications 1 à 6,
**caractérisé en ce que**
l'arbre d'entraînement de transmission (7) et l'arbre porte-satellites (18) du train planétaire de Ravigneaux (2) peuvent être reliés dans le sens de la rotation par une troisième installation de couplage (19).

8. Procédé de gestion d'une boîte de vitesses (1) selon l'une des revendications 2, 3, 6, 7,
**caractérisé en ce que**
dans au moins une plage de fonctionnement (ev1, ev2) à dérivation continue de puissance, la première installation d'embrayage (15) et la seconde (17a) ou la troisième installation d'embrayage (19) sont fermées et **en ce que** dans au moins une plage de transmission de rapport de vitesse (g1, g2, g3, e1, e2, e3), au moins une première installation est formée par au moins une première installation du groupe de l'installation de frein (20), une seconde installation d'embrayage (17a) ou une troisième installation d'embrayage (19), de préférence également une autre installation de ce groupe.

9. Procédé selon la revendication 8,
**caractérisé en ce que**
dans une première plage de fonctionnement (ev1) à dérivation de puissance, continue, la première installation d'embrayage (15) et la seconde installation d'embrayage (17a) et dans une seconde plage de fonctionnement (ev2) à dérivation de puissance, continue, la première installation d'embrayage (15) et la troisième installation d'embrayage (19) sont fermées.

10. Procédé selon la revendication 8 ou 9,
**caractérisé en ce que**
dans la plage de fonctionnement (b1, b2) à dérivation de puissance, en continu on ferme l'entraînement primaire et l'entraînement secondaire (21) et de préférence l'entraînement primaire est fixe et l'entraînement secondaire (21) fonctionne comme moteur ou générateur.

11. Procédé selon l'une des revendications 8 à 10,
**caractérisé en ce que**
dans au moins une plage de fonctionnement de rapports de vitesses (g1, g2, g3) de l'entraînement primaire, on fonctionne de façon transitoire et dans l'entraînement secondaire (21) on fonctionne en mode motorisé ou en mode générateur.

12. Procédé selon l'une des revendications 8 à 11,
**caractérisé en ce que**
dans au moins une plage de fonctionnement de rapports de vitesses (e1, e2, e3), on neutralise l'entraînement primaire et on fait fonctionner l'entraînement secondaire (21) comme moteur ou générateur.

13. Procédé selon l'une des revendications 8 à 12,
**caractérisé en ce que**
dans une première plage de fonctionnement de rapports de vitesses (g1, e1) de l'installation de freins (20), on ferme de préférence également la seconde installation d'embrayage (17a).

14. Procédé selon l'une des revendications 8 à 13,
**caractérisé en ce que**
dans une seconde plage de fonctionnement étagée (g2, e2), on ferme la troisième installation d'embrayage (19) de préférence également la seconde installation d'embrayage (17a).

15. Procédé selon l'une des revendications 8 à 14,
**caractérisé en ce que**
dans la troisième plage de fonctionnement de rapports de vitesses (g3, e3), on ferme la troisième installation d'embrayage (19) et le frein (20).
